Europäisches Patentamt

European Patent Office

Office européen des brevets

(11) Veröffentlichungsnummer: **0 548 684 A1**

(19)

# (12) EUROPÄISCHE PATENTANMELDUNG

(21) Anmeldenummer: **92121024.1**

(22) Anmeldetag: **10.12.92**

(51) Int. Cl.5: **C08L 77/00**, C08L 71/12,
//(C08L77/00,71:12,23:00),
(C08L71/12,77:00,23:00)

(30) Priorität: **21.12.91 DE 4142577**

(43) Veröffentlichungstag der Anmeldung:
**30.06.93 Patentblatt 93/26**

(84) Benannte Vertragsstaaten:
**BE DE ES FR GB NL**

(71) Anmelder: **BASF Aktiengesellschaft**
**Carl-Bosch-Strasse 38**
**W-6700 Ludwigshafen(DE)**

(72) Erfinder: **Gottschalk, Axel, Dr.**
**Bürgermeister-Kutterer-Strasse 14**
**W-6700 Ludwigshafen(DE)**
Erfinder: **Weiss, Robert, Dr.**
**Brüsseler Ring 53**
**W-6700 Ludwigshafen(DE)**
Erfinder: **Muehlbach, Klaus, Dr.**
**Im Zaunruecken 20**
**W-6718 Gruenstadt(DE)**
Erfinder: **Hedtmann-Rein, Carola, Dr.**
**Winzerweg 1**
**W-6945 Hirschberg(DE)**
Erfinder: **Heinz, Robert**
**Heilbronner Strasse 12**
**W-6800 Mannheim 51(DE)**

(54) **Verfahren zur Herstellung thermoplastischer Formmassen.**

(57) Zur Herstellung thermoplastischer Formmassen aus
A) 5 - 95 Gew.-% eines modifizierten Polyphenylenethers,
B) 5 bis 95 Gew.-% eines thermoplastischen Polyamids,
C) 0 bis 25 Gew.-% eines schlagzäh modifizierenden Kautschuks und
D) 0 bis 50 Gew.-% Hilfs- und/oder Zusatzstoffe,
werden die Komponenten A und B sowie gegebenenfalls die Komponenten C und D einzeln an einer oder mehreren Stellen in einen Extruder eingespeist, miteinander vermischt und aufgeschmolzen. Dabei wird die in pulverförmiger Konsistenz vorliegende Komponente A vor ihrer Einspeisung unter Druck und gegebenenfalls Wärme, vorzugsweise einem Druck entsprechend einer Linienkraft von 1 bis 100 kN/cm, zu einem porösen Kompaktat verdichtet und/oder gesintert. Das Kompaktat wird anschließend modifiziert und als Granulat der Einzugszone des Extruders zugeführt. Auf diese Weise ergibt sich eine deutliche Verringerung des Feingutanteils des Polyphenylenethers, so daß die Gefahr von Staubexplosionen praktisch nicht mehr besteht. Weitere Vorteile sind eine bessere Dosierbarkeit und verminderte elektrostatische Aufladung.

EP 0 548 684 A1

Die Erfindung betrifft ein Verfahren nach dem Oberbegriff des Patentanspruchs 1.

Thermoplastische Formmassen aus modifizierten Polyphenylenethern und Polyamiden, die gegebenenfalls Hilfs- und/oder Zusatzstoffe enthalten können, sind aus den WO 85/05371, WO 87/05304, EP-A-0 046 040 und EP-A-0 260 123 bekannt. Zu ihrer Herstellung wird üblicherweise pulverförmiger Polyphenylenether eingesetzt. Die großtechnische Verarbeitung solcher Pulver birgt indes erhebliche Sicherheitsrisiken, da es bei allen anfallenden Transport- und Fördervorgängen, einschließlich der Konfektionierung, zu Staubexplosionen kommen kann. Zudem kann sich das feinteilige Pulver elektrostatisch aufladen, wodurch die Handhabbarkeit und damit die Dosierbarkeit wesentlich erschwert wird. Schließlich führt der dem feinteiligen Pulver anhaftende Luftsauerstoff in Verbindung mit hohen Verarbeitungstemperaturen häufiger zum teilweisen oxidativen Abbau des Polymeren und damit zu einem relativ hohen Schmutzgehalt der Formmassen.

Mit der Erfindung soll ein Verfahren zur Herstellung thermoplastischer Formmassen geschaffen werden, welches von den geschilderten Mängeln frei ist, produktschonend arbeitet und es insbesondere ermöglicht, homogene Formmassen mit sehr guten mechanischen und thermischen Eigenschaften zu erhalten.

Zur Lösung dieser Aufgabe werden die im Kennzeichen des Anspruchs 1 enthaltenen Maßnahmen vorgeschlagen.

Die für das erfindungsgemäße Verfahren in Betracht kommenden Komponenten A bis D sind bekannt und beispielsweise in der DE-A-39 29 686 beschrieben.

Zur Verarbeitung, d.h. zur Dosierung und Einspeisung in einen Extruder wird der pulverförmige Polyphenylenether (Komponente A) einer Teilchengröße von im allgemeinen < 1 mm zunächst in einem ersten Verfahrensschritt in einen kompakten Zustand gebracht. Dieses Verdichten und/oder Sintern erfolgt zweckmäßig unter Druck und gegebenenfalls Wärme, vorzugsweise unter einem Druck entsprechend einer Linienkraft von 1 bis 100 kN/cm, insbesondere 5 und 50 kN/cm, und bei einer Temperatur von etwa 10°C bis etwa 150°C, bevorzugt 20°C bis 50°C.

Hierzu kann der pulverförmige Polyphenylenether beispielsweise in einem Preßwerkzeug einem mit etwa 10 bis 20 Hfz oszillierenden Druck von etwa 10 bis 200 bar ausgesetzt werden. Das Pressen ist in der Weise abzustufen, daß sich unterhalb des Kristallitschmelzpunktes eine Korngrenzenhaftung ergibt, die ausreicht, um die einzelnen Partikel zu einem körnigen Kompaktat zu verbinden. Durch Erhöhung der Oszillatorfrequenz oder wahlweise durch Variation der Pressung kann das Kompaktat bis zum Erweichungspunkt erwärmt und in festem Zustand nachfolgend zerkleinert werden.

Für die Verarbeitung großer Mengen Pulver ist ein kontinuierliches Verpressen erforderlich. Hierfür eignen sich sowohl Kompaktoreinrichtungen, z.B. solcher der Fa. Bepex GmbH, Leingarten, als auch handelsübliche Tablettierpressen. Kompaktoreinrichtungen bestehen im wesentlichen aus zwei gegenläufig drehenden Walzen und einer Schneckenmaschine mit konischem Trichter und einer Stopfschnecke, über die die Beschickung der Walzen erfolgt. Je nach Produkteigenschaften können Schnecken mit unterschiedlichem Verdichtungsverhalten eingesetzt werden. Es können plattenförmige Kompaktate oder Kompaktate in Form von Profilsträngen kontinuierlich hergestellt werden, die anschließend in weiteren Arbeitsschritten mittels üblicher Zerkleinerungsmaschinen, z.B. Fladenbrecher, und Siebeinrichtungen, z.B. Siebgranulator, zerkleinert und auf die gewünschte Teilchengröße gesiebt werden. Abgesiebtes Produkt wird der Kompaktoreinrichtung wieder zugeführt. Auf die Arbeitsschritte "Zerkleinern" und "Sieben" kann dann verzichtet werden, wenn der pulverförmige Polyphenylenether in einer Tablettierpresse mit entsprechenden Einsätzen unmittelbar zu Kompaktatteilchen bzw. Agglomeraten der gewünschten Größe verpreßt wird. Insgesamt haben sich Teilchengrößen der so hergestellten Agglomerate von etwa 1 mm bis etwa 20 mm für die nachfolgende Verarbeitung als besonders günstig erwiesen.

Zweck des Verdichtens und/oder Sinterns des pulverförmigen Polyphenylenethers ist die Entfernung der in der lockeren Schüttung des Pulvers enthaltenen Luft. Je nach Schüttgewicht des Pulvers können Verdichtungsverhältnisse von etwa 1:1,1 bis etwa 1:3 erforderlich sein, wodurch Kompaktate einer Dichte von etwa 0,5 bis 1,1 g/cm$^3$ entstehen.

Die Kompaktate werden anschließend modifiziert, z.B. nach der in der DE-A-39 29 686 beschriebenen Weise.

Durch die Kompaktierung ergibt sich eine deutliche Verringerung des Feingutanteils, so daß die Gefahr von Staubexplosionen drastisch herabgesetzt ist. Darüber hinaus wird auch die Inhalationsgefahr von Polymerstaub wesentlich reduziert. Weitere Vorteile sind eine bessere Dosierbarkeit und verminderte elektrostatische Aufladung.

Die so kompaktierte und modifizierte Komponente A wird nachfolgend zusammen mit der Komponente B in eine erste Zone eines Extruders eingespeist. Die Komponenten A und B werden im allgemeinen einzeln an einer oder mehreren Stellen in den Extruder eingebracht, welcher an sich bekannt und handelsüblich ist. Besonders geeignet sind selbstreinigende, zweiwellige Schneckenextruder mit im gleichen Sinne rotierenden Schneckenwellen und zonenweiser Beheizung bzw. Kühlung des Gehäuses. Die Schneckenwellen in dieser ersten Zone, die eine Länge vom 2- bis 10-fachen, vorzugsweise vom 3- bis 6-fachen des Schneckendurchmessers aufweist, sind förderwirksam ausgebildet. Die erste Zone kann beheizt oder gekühlt werden. Auf alle Fälle wird in dieser ersten Zone bei einer Temperatur unterhalb der Schmelztemperatur der Komponente A bzw. B gefahren, bei der ein Klumpen und Kleben der eingesetzten Produkte vermieden wird. In diese erste Zone können zusätzlich zu den Komponenten A und B gegebenenfalls auch noch weitere, insbesondere feste Mischungsbestandteile eingespeist werden, wobei hierfür vor allem polymere Zusatzstoffe in Betracht kommen.

Aus der ersten Zone werden die thermoplastisch verarbeitbaren Polymeren sowie die gegebenenfalls eingespeisten Zusatzstoffe in eine zweite Zone gefördert, in die die Komponenten C und D zudosiert und alle Mischungsbestandteile unter Aufschmelzen der thermoplastisch verarbeitbaren Polymeren homogen miteinander vermischt werden. Die Maßnahme, daß die Komponenten C und D in der zweiten Zone des Extruders zudosiert werden sollen, bedeutet, daß die überwiegende Menge dieser Komponenten an dieser Stelle in den Extruder eingespeist wird. Es können auch die Komponenten C und D in der ersten Zone des Extruders zugegeben werden. Vorzugsweise wird jedoch die Gesamtmenge der Komponenten C und D an einer oder mehreren Stellen in der zweiten Zone zudosiert werden.

Die Temperatur in der zweiten Zone des Extruders wird so gehalten, daß sie zum Aufschmelzen der thermoplastisch verarbeitbaren Polymeren sowie zum homogenen Vermischen der einzelnen Bestandteile hinreichend ist, ohne daß hierbei eine thermische Schädigung der Produkte erfolgt. Im allgemeinen wird diese zweite Zone auf Temperaturen (Heiztemperatur des Extruders) zwischen etwa 200°C und etwa 350°C, vorzugsweise zwischen 250°C und 300°C aufgeheizt und die Temperatur so geführt, daß die Temperatur der Schmelze mindestens 5 bis 15°C über der Erweichungstemperatur des Gemisches liegt. Die Länge dieser zweiten Zone beträgt im allgemeinen das 10- bis 50-fache, vorzugsweise das 12- bis 36-fache, des Schneckendurchmessers. Die Schnecken im hinteren Teil der zweiten Zone sind dabei so ausgebildet, daß man einen optimalen Misch- und Homogenisierungseffekt erhält. Beispielsweise können die zum Mischen und Homogenisieren bekannten und üblichen Knetscheiben-Schneckenelemente eingesetzt werden, wodurch eine intensive Quervermischung und gute Dispergierwirkung durch Erzeugung von Scherkraftfeldern unterschiedlicher Stärke bewirkt wird. Es hat sich als zweckmäßig erwiesen, mit Schergeschwindigkeiten von 200 bis 1800 $sec^{-1}$, vorzugsweise von 350 bis 850 $sec^{-1}$ zu arbeiten. Die zweite Zone kann auch in mehreren Abschnitten unterschiedlich temperiert werden, so daß beispielsweise die Temperatur in dem vorderen Teil, in den die Komponenten C und D eingespeist werden, niedriger liegt als in dem hinteren Teil, in dem das Homogenisieren erfolgt. Außerdem kann diese zweite Zone einen Entgasungsstutzen tragen, um flüchtige Anteile oder Hilfsstoffe zu entfernen.

Nach der Entgasung wird das nach dem Verfahren hergestellte Gemisch aus dem Extruder ausgetragen und anschließend in an sich bekannter Weise weiterverarbeitet.

Die mittlere Verweilzeit der Produkte in dem Extruder beträgt im allgemeinen 0,5 bis 10 min, vorzugsweise 1 bis 5 min. Bei längeren Verweilzeiten besteht die Gefahr, thermisch geschädigte Produkte zu erhalten. Durch die Selbstreinigung der Schnecken wird ein Verkleben bzw. Verkrusten der Schneckenoberflächen verhindert. Der Einsatz der selbstreinigenden Schnecken trägt daher wesentlich zur Vermeidung von Inhomogenitäten in den thermoplastischen Formmassen bei.

Die erfindungsgemäß hergestellten Formmassen können bestehen aus

A) 5 - 95 Gew.-% eines modifizierten Polyphenylenethers,
B) 5 bis 95 Gew.-% eines thermoplastischen Polyamids,
C) 0 bis 25 Gew.-% eines schlagzäh modifizierenden Kautschuks und
D) 0 bis 50 Gew.-% Hilfs- und/oder Zusatzstoffe, wie mineralische Füllstoffe, Flammschutzmittel usw.

Sie zeichnen sich insbesondere durch sehr gute mechanische und thermische Eigenschaften aus.


Beispiele


Zur Durchführung der Beispiele wurde ein Zweiwellenextruder mit drei Zonen (Bauart Werner & Pfleiderer, Stuttgart) eingesetzt. Der Durchmesser der im gleichen Sinne rotierenden und dicht kämmenden Schneckenwellen betrug 53 mm. Die Komponenten A und B wurden direkt in den Einzug der ersten Zone dosiert. Die Komponente C wurde in die zweite Zone mit Hilfe einer Stopfschnecke kalt in das Komponentengemisch aus A und B eingespeist.

Die Bestimmung der Molekulargewichte erfolgte nach der GPC-Methode mit Shodex-Trennsäulen 0.8•50 cm vom Typ A803, A804 und A805 mit THF als Elutionsmittel bei Raumtemperatur. Die Lösung der PPE-Proben in THF erfolgt unter Druck bei 110°C. Injiziert werden 0,160 ml einer 0,25 %igen Lösung. Die Detektion erfolgte mit einem UV-Detektor. Die Eichung der Säulen wurde mit PPE-Proben, deren absolute Molekulargewichtsverteilungen durch eine GPC-Laser-Lichtstreuungs-Kombination bestimmt worden waren, durchgeführt.

Es wurden folgende Komponenten eingesetzt:

Komponente A - modifizierter Polyphenylenether

Pulverförmiger Poly-(2,6-dimethyl-1,4-phenylenether) mit einem mittleren Molekulargewicht von $M_w$ = 30 000, 98 Gew.-% modifiziert mit 1,95 Gew.-% Fumarsäure und 0,05 Gew.-% 3,4-Dimethyl-3,4-diphenylhexan durch Mischen bei Temperaturen von 290 - 310°C in einem Zweischneckenextruder mit anschließender Entgasung. Die Schmelze wurde in ein Wasserbad eingeleitet, granuliert und getrocknet.

Komponente B - Polyamid

Polyamid 6,6 (Viskositätszahl nach DIN 53727 in konzentrierter Ameisensäure: VZ = 134 cm$^3$/g

Komponente C - Kautschuk

Vierblockkautschuk Tufprene A der Firma Asahi Chem. mit der Blockfolge S-B-S'-B' bei einem Styrolgehalt von 41 Gew.-%.

Kompaktierung

Es wurde das oben beschriebene Polyphenylenether-Pulver auf einem Laborkompaktor L 200/50 der Firma Bepex GmbH, Leingarten (Schneckentyp 0,75 konkav) unter den folgenden Bedingungen kompaktiert: Walrentyp 6 mm Feinprofil, Walzenbreite 50 mm, Walzendurchmesser 200 mm, Walzendrehzahl 8,4 U/min, Walzentemperatur 25°C, Schneckendrehzahl 34 U/min, Produkttemperatur 35°C, Linienkraft 11,2 kN/cm, Durchsatz 40,8 kg/h.

Das Kompaktat wurde mittels Fladenbrecher und Siebgranulator auf eine mittlere Teilchengröße von 0,8 mm zerkleinert.

Die Eigenschaften der erfindungsgemäß hergestellten Formmassen zeigen die Tabellen.

Tabelle 1

| Nr. | Komponente (Gew.-%) | | | Fumarisierung | Vicat B | DSTA bei -30° | duktiler Bruch | | Schmutzgehalt |
|-----|-----|-----|-----|-----|-----|-----|-----|-----|-----|
| | A | B | C | (%) | (°C) | (Nm) | 0°C | -20°C | mm$^2$/m$^2$ |
| 2 | A/42 | 48 | 10 | 0,27 | 198 | 48 | 10 | 7 | 20 |
| 5 | A/44 | 44 | 12 | 0,25 | 193 | 45 | 10 | 8 | 15 |

Tabelle 2

Korngrößenverteilung von PPE-Pulver u. Kompaktat

| | Pulver | Kompaktat |
|-----|-----|-----|
| mittlere Teilchengröße    x 50 (μm) | 200 | 800 |
| Gewichtsanteil d. Teilchen    < 63 μm (%) | 30 | < 5 |

EP 0 548 684 A1

Tabelle 3
Partikelgrößenverteilung

| | PPE-Pulver | Kompaktat |
|---|---|---|
| | Gew.-% | |
| Teilchengröße < 100 μm | 30 | 5 |
| 100 - 1000 μm | 66 | 33 |
| 1000 - 2000 μm | 4 | 26 |
| > 2000 μm | 0 | 36 |

Tabelle 4
Staubexplesionsfähigkeit

| | PPE-Pulver | PPE-Kompaktat |
|---|---|---|
| Staubexplesionsfähigkeit | ja | nein |
| Mindestzündenergie (MZE) [mJ] | 10 < MZE < 20 | - |

Folgende Bestimmungen wurden durchgeführt:

1) Sicherheitstechnische Kenndaten

Staubexplosionsfähigkeit

Staubexplosionsfähigkeit im modifizierten Hartmannrohr

Staubproben wurden in Konzentration zwischen 30 und 1000 g/m³ in einem senkrecht stehenden, unten geschlossenen und oben mit einem lose aufliegenden Klappdeckel versehenen Glasrohr (Volumen ca. 1,2 Liter) mit Luft aufgewirbelt und zu zünden versucht. Als Zündquelle wurden elektrische Dauerfunken mit einer Energie von ca. 4 Joule oder eine Glühwendel mit einer Drahttemperatur von ca. 1200°C eingesetzt.

Mindestzündenergie

Die Mindestzündenergie ist ein Maß für die Zündempfindlichkeit von Staub/Luft-Gemischen durch elektrische Funken.

Zur Bestimmung wurden Staubproben in Konzentrationen zwischen 30 und 1000 g/m$^3$ in einer modifizierten Hartmann-Apparatur (Volumen ca. 1,2 Liter) mit Luft aufgewirbelt und über eine Funkenstrecke mit zeitlich gedehnten Kondensatorentladungen definierter Energie beaufschlagt.

2) Korngrößen und -Verteilungen durch Siebanalyse nach DIN 53734

3) Schmutzbestimmung:

Die Schmutzgehaltbestimmung erfolgt durch visuelle Auszählung der Schmutzpartikel in spritzgegossenen Rundscheiben. Das zur Herstellung der Rundscheiben verwendete Granulat wird 60 min. bei 80°C getrocknet. An 10 Rundscheiben (Durchmesser 60 mm) werden die Schmutzpunkte auf einer Seite nach Größe mit Hilfe einer Schablone gezählt und addiert. Aus der summierten Schmutzfläche wird die mittlere Schmutzfläche /m$^2$ hochgerechnet.

4) Wärmeformbeständigkeit Vicat B nach DIN 53460

5) Multiaxiale Zähigkeit bei 23 und -30°C nach DIN 53443

6) Funktionalität des Polyphenylenethers:

Proben der mit Fumarsäure funktionalisierten Polyphenylenether werden in Toluol gelöst, in der 5-fachen Menge an Methanol gefällt, abgesaugt und getrocknet. Anschließend wird die Säurezahl durch Titration mit alkoholischer NaOH gegen Phenolphthalein bestimmt. Ausgehend von der Säurezahl wird der Fumarisierungsgrad (Gew.-%) des Polyphenylenethers bestimmt.

7) Duktiles Bruchverhalten:

Das Bruchbild wurde an den geschlagenen Rundscheiben (60 x 2 mm) visuell bestimmt. Für jeden Meßwert wurden 10 Rundscheiben geschlagen und aus den Einzelmessungen ein Mittelwert gebildet. Angegeben ist jeweils die Zahl der duktil gebrochenen Rundscheiben. Das Bruchbild wurde als duktil eingeordnet, wenn sich eine trichterartige durch plastische Deformation verursachte Ausstülpung bildet. Als Strödbruch wurden die Rundscheiben klassifiziert, bei denen nach Schlagbeanspruchung die Rundscheibe splittert und nur wenig plastische Deformation zeigt.

**Patentansprüche**

**1.** Verfahren zur Herstellung thermoplastischer Formmassen aus

A) 5 - 95 Gew.-% eines modifizierten Polyphenylenethers,

B) 5 bis 95 Gew.-% eines thermoplastischen Polyamids,

C) 0 bis 25 Gew.-% eines schlagzäh modifizierenden Kautschuks und

D) 0 bis 50 Gew.-% Hilfs- und/oder Zusatzstoffe,

bei dem die Komponenten A und B sowie gegebenenfalls die Komponenten C und D einzeln an einer oder mehreren Stellen in einen Extruder eingespeist, miteinander vermischt und aufgeschmolzen werden und das geschmolzene Gemisch extrudiert wird, dadurch gekennzeichnet, daß die Komponente A vor ihrer Einspeisung unter Druck und gegebenenfalls Wärme zu einem porösen Kompaktat verdichtet und/oder gesintert, modifiziert und als Granulat der Einzugszone des Extruders zugeführt wird.

**2.** Verfahren nach Anspruch 1, dadurch gekennzeichnet, daß die Komponente A bei Temperaturen von etwa 10°C bis etwa 150°C und einem Druck entsprechend einer Linienkraft von 1 bis 100 kN/cm verdichtet und/oder gesintert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,Y | EP-A-0 260 123 (MITSUBISHI GAS CHEMICAL COMPANY, LIMITED) * Seite 4, Zeile 42 - Zeile 44; Ansprüche 1-9 * --- | 1,2 | C08L77/00 C08L71/12 //(C08L77/00, 71:12,23:00) (C08L71/12, 77:00,23:00) |
| Y | EP-A-0 276 768 (BASF AKTIENGESELLSCHAFT) * Ansprüche 1-4 * --- | 1,2 | |
| A | EP-A-0 314 000 (BASF AKTIENGESELLSCHAFT) * Anspruch 9 * --- | 1,2 | |
| A | EP-A-0 351 590 (BASF AKTIENGESELLSCHAFT) * Seite 13, Zeile 25 - Zeile 55 * ----- | 1,2 | |

| | |
|---|---|
| | RECHERCHIERTE SACHGEBIETE (Int. Cl.5 ) |
| | C08L |

Der vorliegende Recherchenbericht wurde für alle Patentansprüche erstellt

| Recherchenort | Abschlußdatum der Recherche | Prüfer |
|---|---|---|
| DEN HAAG | 07 APRIL 1993 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument